# EUROPÄISCHE PATENTSCHRIFT

(11) **EP 3 794 236 B1**
(45) Veröffentlichungstag und Bekanntmachung des Hinweises auf die Patenterteilung: **26.07.2023**
(21) Anmeldenummer: 19711317.8
(22) Anmeldetag: 13.03.2019
(51) Int. Cl.: F04D 23/00, F04D 29/059, F04D 29/28

(54) **SEITENKANALVERDICHTER FÜR EIN BRENNSTOFFZELLENSYSTEM ZUR FÖRDERUNG UND/ODER VERDICHTUNG VON EINEM GASFÖRMIGEN MEDIUM**
SIDE CHANNEL COMPRESSOR FOR A FUEL CELL SYSTEM FOR CONVEYING AND/OR COMPRESSING A GASEOUS MEDIUM
COMPRESSEUR À CANAL LATÉRAL POUR SYSTÈME DE PILE À COMBUSTIBLE, PERMETTANT LE TRANSPORT ET/OU LA COMPRESSION D'UN FLUIDE GAZEUX

(30) Priorität: 18.05.2018 DE 102018207891
(43) Veröffentlichungstag der Anmeldung: 24.03.2021
(73) Patentinhaber: Robert Bosch GmbH, 70442 Stuttgart (DE)
(72) Erfinder: KURZ, Michael, 73207 Plochingen (DE)
(86) Internationale Anmeldenummer: PCT/EP2019/056279
(87) Internationale Veröffentlichungsnummer: WO 2019/219270

(56) Entgegenhaltungen:
- WO-A1-01/98664
- DE-A1- 10 032 984
- DE-A1- 10 327 536
- DE-A1-102015 202 942
- DE-A1-102016 210 464
- DE-C1- 19 847 522

## Beschreibung

### Stand der Technik

Die vorliegende Erfindung betrifft einen Seitenkanalverdichter für ein Brennstoffzellensystem zum Fördern und/oder Verdichten von einem gasförmigen Medium, insbesondere Wasserstoff, das insbesondere zur Anwendung in Fahrzeugen mit einem Brennstoffzellenantrieb vorgesehen ist.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich wie bei der Einspritzung von flüssigem Kraftstoff gesteuert, sondern es wird das gasförmige Medium aus mindestens einem Hochdrucktank entnommen und über eine Zuströmleitung eines Mitteldruckleitungssystem an eine Ejektoreinheit geleitet. Diese Ejektoreinheit führt das gasförmige Medium über eine Verbindungsleitung eines Niederdruckleitungssystems zu einer Brennstoffzelle. Nachdem das gasförmige Medium durch die Brennstoffzelle geströmt ist wird es über eine Rückführleitung zurück zur Ejektoreinheit geführt. Dabei kann der Seitenkanalverdichter zwischengeschaltet werden, der die Gasrückführung strömungstechnisch und effizienztechnisch unterstützt. Zudem werden Seitenkanalverdichter zur Unterstützung des Strömungsaufbaus im Brennstoffzellenantrieb eingesetzt, insbesondere bei einem (Kalt)-Start des Fahrzeugs nach einer gewissen Standzeit. Das Antreiben dieser Seitenkanalverdichter erfolgt üblicherweise über Elektromotoren, die beim Betrieb in Fahrzeugen über die Fahrzeugbatterie mit Spannung versorgt werden.

Aus der DE 10 2010 035 039 A1 ist ein Seitenkanalverdichter für ein Brennstoffzellensystem bekannt, bei dem ein gasförmiges Medium, insbesondere Wasserstoff, gefördert und/oder verdichtet wird. Der Seitenkanalverdichter weist ein in einem Gehäuse umlaufendes Verdichterrad auf, das auf einer Antriebswelle befestigt ist und von einem Antrieb in Rotation versetzt wird und somit drehbar um eine Drehachse angeordnet ist. Weiterhin weist der Seitenkanalverdichter einen in dem Gehäuse befindlichen Verdichterraum auf, der mindestens einen umlaufenden Seitenkanal aufweist. Das Verdichterrad weist dabei an seinem Umfang im Bereich des Verdichterraums angeordnete Förderzellen auf. Im Gehäuse ist zudem jeweils eine Gas-Einlassöffnung und eine Gas-Auslassöffnung angeordnet, die über den mindestens einen Seitenkanal fluidisch miteinander verbunden sind. Dabei weist das Gehäuse eine erste und zweite Anlauffläche auf, wobei die jeweilige Anlauffläche jeweils dem Verdichterrad zugewandt und axial zur Drehachse verläuft. Das Verdichterrad weist eine dritte und eine vierte Anlauffläche auf, wobei die jeweilige Anlauffläche jeweils dem Gehäuse zugewandt und axial zur Drehachse verläuft. Dabei bilden sich jeweils ein innerer Axialsspalt und eine äußerer Axialspalt aus, wobei sich jeweils der innere und der äußere Axialsspalt zwischen der ersten Anlauffläche des Gehäuses und der vierten Anlauffläche des Verdichterrads ausbildet und wobei sich jeweils der innere und der äußere Axialsspalt zwischen der zweiten Anlauffläche des Gehäuses und der dritten Anlauffläche des Verdichterrads ausbildet.

Die DE 10 2015 202 942 A1 beschreibt eine Pumpvorrichtung zum Antreiben von Blowby-Gas in einer Kurbelgehäuseentlüftungseinrichtung.

Aus der DE 100 32 984 A1 ist ein Kreiselverdichter wie Radialverdichter oder Seitenkanalverdichter mit einem Laufrad, einer Laufradwelle und einem Verdichtergehäuse bekannt.

Aus der DE 103 27 536 A1 ist eine Wälzlageranordnung, insbesondere zur Anwendung, bei einer Rezirkulationspumpe eines Brennstoffzellensystems, bekannt.

Die DE 10 2016 210 464 A1 beschreibt eine Verdichteranordnung zum Verdichten eines Gases.

Der aus der DE 10 2010 035 039 A1, DE 10 2015 202 942 A1, DE 100 32 984 A1, DE 103 27 536 A1 und der DE 10 2016 210 464 A1 bekannte Seitenkanalverdichter kann gewisse Nachteile aufweisen. Aufgrund der Lagerung des Verdichterrads mittels eines ersten Lagers und eines zweiten Lagers, die sich beide auf der Antriebswelle befinden und jeweils den gleichen Lager-Durchmesser aufweisen, wobei der jeweilige Lagerdurchmesser konstruktiv vom Durchmesser der Antriebswelle abhängt, kann das Verdichterrads bei der Rotation nur relativ ungenau geführt werden, da eine genau Führung des Verdichterrads axial zur Drehachse und eine Verhinderung des Verkippens des Verdichterrads aufgrund der Anordnung der beiden Lager auf der Antriebswelle erschwert wird. Um eine Kollision und/oder ein Aufeinanderprallen des Verdichterrads mit dem Gehäuse axial zur Drehachse zu verhindern, insbesondere bei während des Förderbetriebs auftretenden Querkräften, die axial zur Drehachse verlaufen, muss der Abstand mindestens einer jeweiligen Anlauffläche des Gehäuse zur jeweiligen Anlauffläche des Verdichterrads entsprechend groß gewählt werden, wobei die Einhaltung eines geringen Spaltmaß zwischen den Bauteilen nicht mehr möglich ist. Dadurch ist eine effiziente und nahezu vollständige Kapselung des Verdichterraums mittels der Axialspalte zwischen den Anlaufflächen nicht möglich, wodurch sich der Wirkungsgrad des Seitenkanalverdichters verringert.

### Offenbarung der Erfindung

### Vorteile der Erfindung

Erfindungsgemäß wird ein Seitenkanalverdichter für ein Brennstoffzellensystem gemäß Anspruch 1 vorgeschlagen, zum Fördern und/oder Verdichten von einem gasförmigen Medium, insbesondere Wasserstoff.

Bezugnehmend auf Anspruch 1 ist der Seitenkanalverdichters derart ausgebildet, dass das Gehäuse ein Gehäuse-Oberteil und ein Gehäuse-Unterteil aufweist, wobei das Gehäuse-Unterteil einen um die Drehachse umlaufenden zylindrischen Ansatz aufweist, wobei eine axial zur Drehachse verlaufende Lagervorspannkraft, die auf das erste Lager und/oder auf das zweite Lager wirkt, mittels einer Abstandsscheibe eingestellt wird, wobei sich die Abstandsscheibe axial zur Drehachse zwischen dem zylindrischen Ansatz und dem Gehäuse-Oberteil befindet.

Auf diese Weise kann eine verbesserte Führung der Rotation des Verdichterrads, insbesondere bei einem größeren Lagerdurchmesser des zweiten Lagers im Vergleich zum ersten Lager, erzielt werden. Zudem kann durch das Aufbringen des zweiten Lagers auf das Verdichterrad eine exaktere Führung des Verdichterrads, inbesondere gegen Verkippen, erzielt werden. Dabei werden axial zu einer Drehachse verlaufende Querkräfte und Stöße aus dem Betrieb des Seitenkanalverdichters mittels des zweiten Lagers direkt aus dem Verdichterrad in das Gehäuse abgeführt, wodurch eine Beschädigung des Verdichterrads und/oder des Gehäuses durch ein Aneinanderprallen der Bauteile aufgrund von Querkräften und Stößen verhindert wird. Weiterhin lassen sich die funktionsrelevanten Axialspalte, die axial zur Drehachse zwischen dem Verdichterrad und dem Gehäuse verlaufen, bei denen es sich insbesondere um den Abstand mindestens einer Anlauffläche des Gehäuse zu jeweils einer Anlauffläche des Verdichterrads handelt und die eine Kapselung des Verdichterraums bewirken, verkleinern. Dadurch kann das Spaltmaß zwischen den Bauteilen verringert werden. Dadurch kann eine verbesserte Kapselung des Verdichterraums erzielt werden, wodurch der Verlust vom gasförmigen zu fördernden Medium, bei dem es sich insbesondere um Wasserstoff handelt, verringert wird. Durch die verbesserte Kapselung kann darüber hinaus eine optimale Strömungsgeschwindigkeit des gasförmigen Mediums beibehalten werden. Dadurch lässt sich eine verbesserte Förderung und Verdichtung des gasförmigen Mediums im Seitenkanalverdichter erzielen und der Wirkungsgrad des Seitenkanalverdichters kann erhöht werden. Zudem lässt sich auf diese Weise der Vorteil erzielen, dass mit nur einem einzelnen Montageschritt das Gehäuse-Unterteil mit dem Gehäuse-Oberteil verbunden wird und zudem das erste Lager und/oder das zweite Lager mit einer festgelegten Lagervorspannkraft beaufschlagt werden. Dadurch lässt sich die benötigte Montagezeit reduzieren und es lassen sich Montagekosten einsparen. Das Vorsehen des zylindrischen Ansatzes am Gehäuse-Unterteil bietet darüber hinaus den Vorteil, dass das Gehäuse-Unterteil bei dem Montagevorgang am Gehäuse-Oberteil geführt wird und somit ein Montagefehler vermieden werden kann. Dadurch lässt sich die Ausfallwahrscheinlichkeit des Seitenkanalverdichters reduzieren. Des Weiteren lassen sich die Spaltmaße der funktionsrelevanten Spalte zwischen dem Verdichterrad und dem Gehäuse-Unterteil und/oder zwischen dem Verdichterrad und dem Gehäuse-Oberteil durch die Verwendung der Abstandsscheibe optimal einstellen, so dass eine verbesserte Kapselung des Verdichterraums erzielt werden kann und somit der Wirkungsgrad des Seitenkanalverdichters verbessert werden kann. Weiterhin muss zu Berücksichtigung der Toleranzmaße, insbesondere axial zur Drehachse, und zu optimalen Einstellung der Lagervorspannkraft des ersten Lagers und/oder des zweiten Lagers nur das Bauteil Abstandsscheibe bearbeitet werden, jedoch nicht zwangsläufig die Bauteile Gehäuse-Unterteil und/oder Verdichterrad und/oder Gehäuse-Oberteil. Auf diese Weise können die Fertigungskosten und/oder die Bearbeitungskosten und/oder die Montagekosten reduziert werden.

Durch die in den Unteransprüchen aufgeführten Maßnahmen sind vorteilhafte Weiterbildungen des im Anspruch 1 angegebenen Verdichters möglich. Die Unteransprüche betreffen bevorzugte Weiterbildungen der Erfindung.

Gemäß einer besonders vorteilhaften Ausgestaltung ist das erste Lager als ein Radiallager und das zweite Lager als ein Axiallager ausgeführt. Auf diese Weise kann erreicht werden, dass eine bessere Aufnahme von im Betrieb des Seitenkanalverdichters auftretenden Radialkräften und/oder Axialkräften aus dem Verdichterrad in die Lager erfolgt, wobei diese auftretenden Kräfte somit schneller und/oder effizienter aus dem Verdichterrad und/oder der Antriebswelle über die Lager, insbesondere in das Gehäuse, abgeführt werden können. Dabei erfolgt eine Aufteilung der Radialkräfte und der Axialkräfte jeweils auf das erste und das zweite Lager, wobei die auftretenden Radialkräfte zum großen Teil vom ersten Lager aufgenommen werden und nur zum kleinen Teil vom zweiten Lager aufgenommen werden. Die auftretenden Axialkräfte werden jedoch zum großen Teil vom zweiten Lager aufgenommen und nur zum geringen Teil vom ersten Lager aufgenommen. Somit kann der Vorteil erzielt werden, dass die auftretenden Kräfte das Verdichterrad, insbesondere bei einer Rotation, nicht derart verformen und/oder axial und/oder radial zur Drehachse auslenken, dass das Verdichterrad im Bereich der mindestens einen Anlauffläche mit dem Gehäuse in Kontakt kommt und/oder beide Bauteile aufeinanderprallen. Dadurch lässt sich die Lebensdauer der Lager, des Verdichterrads, des Gehäuses und somit des gesamten Seitenkanalverdichters erhöhen. Zum anderen kann zumindest nahezu verhindert werden, dass sich die funktionsrelevanten Spalte zwischen dem Verdichterrad und dem Gehäuse jeweils vergrößern oder verkleinern, wodurch eine effiziente Kapselung des Verdichterraums des Seitenkanalverdichters auch bei auftretenden Radialkräften und/oder Axialkräften gewährleisten werden kann. Gemäß einer vorteilhaften Weiterbildung ist das erste Lager als ein Radiallager und das zweite Lager als ein Radiallager ausgeführt. Auf diese Weise kann eine verbesserte Aufnahme durch die Lager und somit eine schnellere Ableitung von konstanten und/oder impulsartig auftretenden Radialkräften und/oder Axialkräften aus dem Verdichterrad erfolgen. Dabei kann das als jeweiliges Radiallager ausgeführte erste und/oder zweite Lager auch Axialkräfte aufnehmen. Dabei kann eine gleichmäßige Aufteilung von Axialkräften auf das erste und das zweite Lager erzielt werden, wodurch die Lebensdauer der Lager und/oder des Verdichterrads erhöhen lässt. Auf diese Weise kann somit die Ausfallwahrscheinlichkeit des gesamten Seitenkanalverdichters reduziert werden.

Gemäß einer besonders vorteilhaften Weiterbildung wird die Lagervorspannkraft mittels eines Verbindens, insbesondere Verschraubens, des Gehäuse-Oberteils und des Gehäuse-Unterteils erzeugt. Dabei wird die Lagervorspannkraft axial zur Drehachse vom Gehäuse-Unterteil auf das zweite Lager vom zweiten Lager auf das Verdichterrad, vom Verdichterrad auf das erste Lager und vom ersten Lager auf das Gehäuse-Oberteil übertragen. Auf diese Weise kann der Vorteil erzielt werden, dass die Spaltmaße der funktionsrelevanten Spalte derart eingestellt werden, inbesondere derart klein eingestellt werden, dass sich möglichst nahezu kein Wasser zwischen den jeweiligen Anlaufflächen des Verdichterrads und jeweils dem Gehäuse-Oberteil und dem Gehäuse-Unterteil, insbesondere im Bereich der funktionsrelevanten Spalte ansammeln kann. Dadurch kann verhindert werden, dass sich bei einem Abschalten des Fahrzeugs bei niedrigen Umgebungstemperaturen Eisbrücken im Bereich der funktionsrelevanten Spalte ausbilden. Derartige Eisbrücken können bei einem (Kalt)-Start des Fahrzeugs die beweglichen Teile des Seitenkanalverdichters und die innenliegenden Oberflächen schädigen und/oder das Verdichterrad des Seitenkanal derart im Gehäuse blockieren, so dass ein Betrieb des Seitenkanalverdichters gar nicht mehr oder nur noch eingeschränkt möglich ist. Somit kann durch die vorteilhafte Ausgestaltung des Seitenkanalverdichters die Zuverlässigkeit des Seitenkanalverdichters erhöht werden.

Gemäß einer vorteilhaften Ausgestaltung weist das Verdichterrad an seinem der Drehachse abgewandten Außenrand, insbesondere einem äußeren Begrenzungsring, einen ringförmigen um die Drehachse umlaufenden Steg auf, wobei sich das zweite Lager axial zur Drehachse auf der dem ersten Lager abgewandten Seite zwischen dem umlaufenden Steg und dem Gehäuse-Unterteil befindet. Auf diese Weise kann eine verbesserte Führung des Verdichterrads während der Rotationsbewegung erzielt werden, wobei die während des Betriebs auftretenden Axialkräfte und Radialkräfte aus dem Verdichterrad über den am Außenrand angeordneten Steg herausgeleitet werden können, wobei diese Kräfte vom zweiten Lager aufgenommen werden. Mittels des umlaufenden Stegs, der an dem der Drehachse abgewandten Außenrand des Verdichterrads angeordnet ist, können axial zur Drehachse verlaufende Kräfte und/oder Verkippmomenten aus dem Verdichterrad besser über den Steg aufgenommen und durch das zweite Lager abgeleitet werden. Das zweite Lager verfügt dabei über einen größeren Durchmesser, insbesondere im Vergleich zu einer Anordnung des zweiten Lagers an der Antriebswelle, und bewirkt ein maximales Ausgleichsmoment, wobei dieses Ausgleichsmoment den axial zur Drehachse verlaufenden Kräften und/oder dem Kippmomente aus dem Verdichterrad entgegenwirkt. Dabei kann das zweite Lager mit einer relativ kleinen Gegenkraft ein relativ großes Verkippmoment aus dem Verdichterrad kompensieren und dabei eine bestmögliche Führung des Verdichterrads erzielen. Dadurch kann eine konstantere und exaktere Führung des Verdichterrads im Rotationsbetrieb erzielt werden, wobei Schädigung des Verdichterrads und des Gehäuses durch ein Aufeinanderprallen der beiden Bauteile aufgrund eines axial zur Drehachse ausgelenkten oder verkippten Verdichterrads verhindert wird. Des Weiteren kann ein geringerer Abstand der Anlaufflächen des Verdichterrads und des Gehäuses und somit ein kleineres Spaltmaß zwischen den Bauteilen realisiert werden, wodurch sich eine bessere Kapselung des Verdichterraums und somit eine Verbesserung des Wirkungsgrads des Seitenkanalverdichters ergibt.

Gemäß einer besonders vorteilhaften Ausgestaltung weist das Verdichterrad an seinem Innendurchmesser eine Verdichterrad-Nabe mit einem Naben-Fuß auf, wobei das Verdichterrad mittels des Naben-Fußes die axial zur Drehachse verlaufende Lagervorspannkraft auf das erste Lager überträgt. Auf diese Weise lässt sich der Vorteil erzielen, dass das erste Lager mittels einer kompakten Bauweise des Seitenkanalverdichters eine Lagervorspannkraft auf das erste Lager aufgebracht werden kann. Zudem wird durch eine derartige erfindungsgemäße Ausgestaltung des Verdichterrads, bei dem die Lagervorspannkraft mittels des Naben-fußes ins Lager eingebracht wird, ein weiteres Bauteil überflüssig, wodurch die Komplexität des Seitenkanalverdichters reduziert werden kann und Montagekosten und/oder Bauteilkosten reduziert werden können. Des Weiteren kann eine Erhöhung der Lebensdauer und des Wirkungsgrads des Seitenkanalverdichters erzielt werden, da weniger Bauteile mit der Lagervorspannkraft beaufschlagt werden und somit die Reibung und der Bauteilverschleiß gesenkt werden kann.

Gemäß einer vorteilhaften Ausgestaltung kann mittels der Abstandsscheibe zusätzlich zur Lagervorspannkraft das Spaltmaß eines ersten Spaltbereichs und/oder eines zweiten Spaltbereichs zwischen dem Verdichterrad und dem Gehäuse eingestellt werden. Auf diese Weise kann die Einstellung des funktionsrelevanten Spaltmaßes, das sich insbesondere durch den axial zur Drehachse verlaufenden Abstand zwischen den Anlaufflächen des Verdichterrads und des Gehäuses ergibt, einfacher realisiert werden, da nach dem Vermessen der relevanten Maße des Verdichterrads und des Gehäuse vor der Montage nur noch die Abstandsscheibe entsprechend bearbeitet werden muss, insbesondere mittels eine entsprechenden Materialabtrags zum Ändern der Dicke der Abstandsscheibe, um ein optimales Spaltmaß einzustellen. Dadurch lassen sich die Bearbeitungskosten des Verdichterrads und des Gehäuses zur Einstellung des Spaltmaßes reduzieren und somit Bearbeitungskosten reduzieren. Zudem lässt sich bei entsprechender planparalleler Ausführung der Anlaufflächen des Verdichterrads und des Gehäuses ein reduziertes Spaltmaß erzielen, wodurch sich eine bessere Kapselung des Verdichterraums und somit eine Verbesserung des Wirkungsgrads des Seitenkanalverdichters ergibt.

Gemäß einer vorteilhaften Weiterbildung befindet sich eine Tellerfeder zwischen dem Gehäuse-Oberteil und dem ersten Lager, wobei die axial zur Drehachse verlaufende Lagervorspannkraft mittels der Tellerfeder vom ersten Lager auf das Gehäuse-Oberteil übertragen wird. Auf diese Weise kann der Vorteil erzielt werden, dass sich die Tellerfeder am Gehäuse-Oberteil und am ersten Lager abstützt und die Lagervorspannkraft über das erste Lager in das Verdichterrad, insbesondere über den Naben-Fuß, eingeleitet wird und das Verdichterrads somit axial fixiert. Dadurch kann eine Durchbiegeverformung des Verdichterrads zumindest weitestgehend verhindert werden. Dadurch lässt sich die Lebensdauer des ersten Lagers, des Verdichterrads und somit des gesamten Seitenkanalverdichters erhöhen. Weiterhin kann eine kompakte Bauweise des Seitenkanalverdichters erzielt werden.

Gemäß einer besonders vorteilhaften Ausgestaltung befindet sich die Tellerfeder zwischen dem ersten Lager und dem Verdichterrad, wobei die axial zur Drehachse verlaufende Lagervorspannkraft mittels der Tellerfeder vom Verdichterrad auf das erste Lager übertragen wird. Auf diese Weise lässt sich zum einen bewirken, insbesondere bei einer kegelförmig um die Drehachse ausgebildeten Tellerfeder, dass die Tellerfeder auf der dem ersten Lager zugewandten Seite die Lagervorspannkraft direkt in das erste Lager einleitet, insbesondere axial zur Drehachse. Auf diese Weise lässt sich zum anderen bewirken, dass die kegelförmig ausgebildete Tellerfeder die axial zu Drehachse verlaufende Lagervorspannkraft auf der dem ersten Lager abgewandten Seite in das zweite Lager einleitet, insbesondere über das Verdichterrad. Dabei stimmt der Durchmesser der am Verdichterrad anliegenden Tellerfeder in diesem Bereich mit dem Durchmesser des zweiten Lagers überein. Dadurch lässt sich der Vorteil erzielen, dass die Biegekräfte im Verdichterrad, die insbesondere durch die Lagervorspannkraft erzeugt werden, reduziert werden können, wodurch sich die Ausfallwahrscheinlichkeit des gesamten Seitenkanalverdichters reduzieren lässt.

Gemäß einer vorteilhaften Ausgestaltung weist das Gehäuse-Unterteil einen um die Drehachse umlaufenden Absatz auf, wobei sich das zweite Lager zwischen dem Verdichterrad und dem umlaufenden Absatz befindet und wobei das zweite Lager insbesondere mittels einer Pressverbands radial zur Drehachse mit dem Absatz in Kontakt steht. Auf diese Weise kann eine verbesserte radiale Führung, insbesondere radial zur Drehachse, des Verdichterrads erzielt werden, wobei sich das zweite Lager mit seinem Innendurchmesser über eine gesamte Lagerbreite am Gehäuse-Unterteil abstützen kann und wobei das zweite Lager auf den Absatz des Gehäuse-Unterteils aufgepresst ist, insbesondere mittels einer Presspassung. Das zweite Lager steht mit seinem Außendurchmesser radial zur Drehachse mit dem Verdichterrad in Kontakt, wobei das Verdichterrad mittels des zweiten Lager bei der Rotationsbewegung geführt und/oder gelagert wird. Darüber hinaus kann das zweite Lager auf der dem ersten Lager abgewandten Seite des Verdichterrads als ein axial zur Drehachse verlaufender Anlauf dienen, um das Verdichterrad auch axial entgegengesetzt zur Federkraft der Tellerfeder axial zu Führung. Dies bietet den Vorteil, dass eine exakte axiale und radiale Führung des Verdichterrads im Gehäuse erzielt werden kann, wobei ein reduziertes Spaltmaß zwischen den Anlaufflächen des Gehäuse mit dem Verdichterrad erzielt wird. Dadurch lässt sich eine bessere Kapselung des Verdichterraums und somit eine Verbesserung des Wirkungsgrads des Seitenkanalverdichters erzielen.

Gemäß einer besonders vorteilhaften Weiterbildung weist das zweite Lager nur einen Lagerinnenring auf, wobei ein Wälzkörper des zweiten Lagers zum einen auf dem Lagerinnenring und zum anderen direkt an einem Innendurchmesser, insbesondere einer gehärteten Lagerlaufbahn, des Verdichterrads abrollt. Auf diese Weise kann ein Lageraußenring des zweiten Lagers eingespart werden, wodurch sich die Anzahl der Bauteile des Seitenkanalverdichters reduziert und somit die Komplexität reduziert wird. Somit lassen sich die Kosten des Seitenkanalverdichters reduzieren. Des Weiteren kann eine kompaktere Bauweise des Seitenkanalverdichters erzielt werden, da das zweite Lager radial zur Drehachse weniger Bauraum beansprucht. Darüber hinaus kann eine höhere Lebensdauer des Seitenkanalverdichters erzielt werden, da eine bessere Führung des Verdichterrads mittels des zweiten Lagers erzielt werden kann.

Gemäß einer vorteilhaften Ausgestaltung weist das zweite Lager nur den Lageraußenring auf, wobei der Wälzkörper des zweiten Lagers zum einen auf dem Lageraußenring und zum anderen direkt an einem Außendurchmesser, insbesondere einer gehärteten Lagerlaufbahn, des Verdichterrads abrollt. Zudem befindet sich das zweite Lager an einem Außendurchmesser des Verdichterrads, wobei sich das zweite Lager radial zur Drehachse zwischen dem Verdichterrad und dem Gehäuse-Unterteil befindet. Auf diese Weise kann der Lagerinnenring des zweiten Lagers eingespart werden, wodurch sich die Anzahl der Bauteile des Seitenkanalverdichters reduziert und somit die Komplexität reduziert wird. Somit lassen sich die Kosten des Seitenkanalverdichters reduzieren. Des Weiteren kann eine kompaktere Bauweise des Seitenkanalverdichters erzielt werden, da das zweite Lager radial zur Drehachse weniger Bauraum durch den Wegfall des Lagerinnenrings beansprucht. Darüber hinaus kann eine höhere Lebensdauer des Seitenkanalverdichters erzielt werden, da eine bessere Führung des Verdichterrads mittels des zweiten Lagers erzielt werden kann. Zudem lassen sich die Montagekosten reduzieren, da das Verdichterrad zusammen mit dem zweiten Lager im Gehäuse-Unterteil montiert und/oder eingeschoben werden kann.

### Kurze Beschreibung der Zeichnung

Anhand der Zeichnung wird die Erfindung nachstehend eingehender beschrieben.

Es zeigt:
- Figur 1: eine schematische Schnittansicht eines erfindungsgemäßen Seitenkanalverdichters gemäß einem ersten Ausführungsbeispiel,
- Figur 2: einen in Figur 1 mit A-A bezeichneten Schnitt des Seitenkanalverdichters in vergrößerter Darstellung,
- Figur 3: eine schematische Schnittansicht des erfindungsgemäßen Seitenkanalverdichters gemäß einem zweiten Ausführungsbeispiel,
- Figur 4: eine schematische Schnittansicht des erfindungsgemäßen Seitenkanalverdichters gemäß einem dritten Ausführungsbeispiel,
- Figur 5: eine schematische Schnittansicht des erfindungsgemäßen Seitenkanalverdichters gemäß einem vierten Ausführungsbeispiel,
- Figur 6: eine schematische Schnittansicht des erfindungsgemäßen Seitenkanalverdichters gemäß einem fünften Ausführungsbeispiel,

### Beschreibung des Ausführungsbeispiels

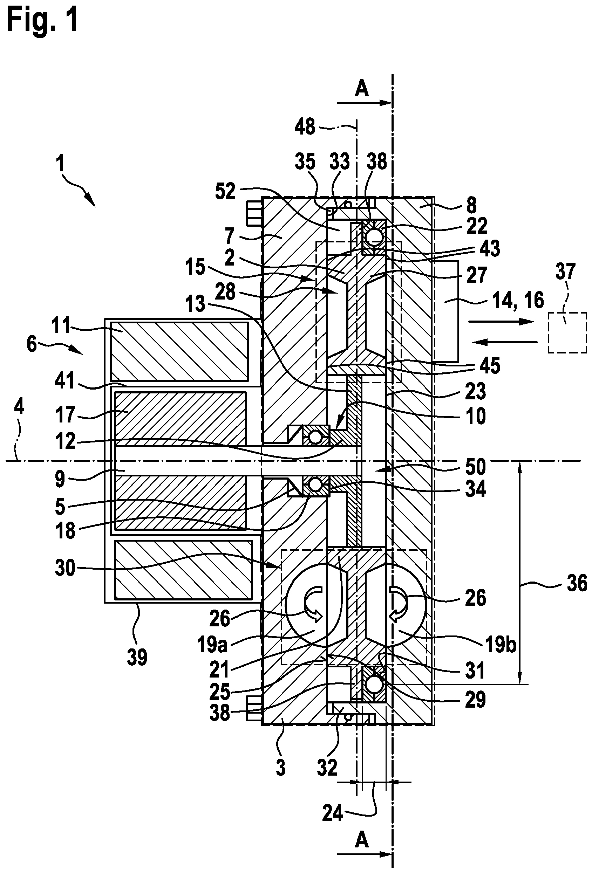

Der Darstellung gemäß **Fig.** 1 ist ein Längsschnitt durch einen rotationssymmetrisch zu einer Drehachse 4 ausgebildeten erfindungsgemäßen Seitenkanalverdichters 1 gemäß einem ersten Ausführungsbeispiel zu entnehmen.

Der Seitenkanalverdichter 1 weist dabei ein Verdichterrad 2 auf, das insbesondere als geschlossenes scheibenartiges Verdichterrad 2 ausgebildet ist und um die horizontal verlaufenden Drehachse 4 drehbar in einem Gehäuse 3 gelagert ist. Dabei dient ein Antrieb 6, insbesondere ein elektrischer Antrieb 6, als Drehantrieb des Verdichterrads 2. Das Gehäuse 3 umfasst ein Gehäuse-Oberteil 7 und ein Gehäuse-Unterteil 8, die miteinander verbunden sind, wobei das Gehäuse-Unterteil 8 einen umlaufenden zylindrischen Ansatz 32 ausbildet. Des Weiteren ist das Verdichterrad 2 drehfest auf einer Antriebswelle 9 angeordnet und wird vom Gehäuse-Oberteil 7 und dem Gehäuse-Unterteil 8 umschlossen. Dabei weist das Gehäuse-Unterteil 8 eine erste Anlauffläche 23 auf, das Gehäuse-Oberteil 7 eine zweite Anlauffläche 25 auf, und das Verdichterrad 2 weist jeweils auf der dem Gehäuse-Oberteil 7 in Richtung der Drehachse 4 zugewandten Seite eine dritte Anlauffläche 29 auf. Zudem weist das Verdichterrad 2 auf der dem Gehäuse-Oberteil 8 in Richtung der Drehachse 4 zugewandten Seite eine vierte Anlauffläche 31 auf. Das Verdichterrad 2 weist eine innere Verdichterrad-Nabe 10 auf, wobei die Verdichterrad-Nabe 10 eine Aussparung aufweist, durch die die Antriebswelle 9 gesteckt ist und wobei die Verdichterrad-Nabe 10 insbesondere mittels eines Pressverbands mit der Antriebswelle 9 verbunden ist.

Die Verdichterrad-Nabe 10 ist zudem umlaufend auf der der Drehachse 4 abgewandten Seite durch einen Naben-Fuß 12 begrenzt. Dabei weist das Verdichterrad 2 an seinem Innendurchmesser die Verdichterrad-Nabe 10 mit dem Naben-Fuß 12 auf, wobei das Verdichterrad 2 mittels des Naben-Fußes 12 die axial zur Drehachse 4 verlaufende Lagervorspannkraft auf ein erstes Lager 18 übertragen kann. Vom Naben-Fuß 12 nach außen von der Drehachse 4 weg bildet das Verdichterrad 2 eine umlaufende kreisförmige Naben-Scheibe 13 aus. Des Weiteren bildet das Verdichterrad 2 eine sich außenseitig an die Naben-Scheibe 13 anschließende Förderzelle 28 aus. Diese Förderzelle 28 des Verdichterrads 2 verläuft umlaufend um die Drehachse 4 in dem umlaufenden Verdichterraum 30 des Gehäuses 3, wobei das Verdichterrad 2 und/oder die Förderzelle 28 symmetrische entlang einer Symmetrieachse 48 verlaufen, wobei die Symmetrieachse 48 orthogonal zur Drehachse 4 angeordnet ist. Vom Antrieb 6 wird ein Drehmoment über die Verdichterrad-Nabe 10 auf das Verdichterrad 2 übertragen. Dabei wird das Verdichterrad 2 in Rotationsbewegung versetzt und die Förderzelle 28 bewegt sich in einer Rotationsbewegung umlaufend um die Drehachse 4 durch den Verdichterraum 30 im Gehäuse 3 in Richtung einer Strömungsrichtung (siehe **Fig**. 2). Dabei wird ein schon im Verdichterraum 30 befindliches gasförmiges Medium durch die Förderzelle 28 mitbewegt und dabei gefördert und/oder verdichtet. Zudem findet eine Bewegung des gasförmigen Mediums, insbesondere ein Strömungsaustausch, zwischen der Förderzelle 28 und dem mindestens einen Seitenkanal 19a, b statt. Dabei bildet sich, insbesondere durch die Ausformung des Verdichterrads 2 und/oder des Seitenkanals 19a, b eine Zirkulationsströmung 26 aus. Des Weiteren strömt das gasförmige Medium, bei dem es sich insbesondere um ein unverbrauchtes Rezirkulationsmedium aus einer Brennstoffzelle handelt, über eine Gas-Einlassöffnung 14 in den Verdichterraum 30 des Seitenkanalverdichters 1 ein und/oder wird dem Seitenkanalverdichter 1 zugeführt und/oder wird aus dem Bereich, der der Gas-Einlassöffnung 14 vorgelagert ist, angesaugt. Dabei wird das gasförmige Medium nach erfolgtem Durchlauf durch eine Gas-Auslassöffnung 16 des Seitenkanalverdichters 1 abgeleitet und strömt insbesondere zu einer Strahlpumpe eines Brennstoffzellensystems 37. Das Verdichterrad 2 bildet dabei einen die Förderzelle 28 auf der der Drehachse 4 zugewandten Seite begrenzenden inneren Begrenzungsring 21 und einen auf der der Drehachse abgewandten Seite begrenzenden äußeren Begrenzungsring 27 auf. Die Begrenzungsringe 21, 27 verlaufen dabei umlaufend um die Drehachse 4 im Bereich des Verdichterraums 30.

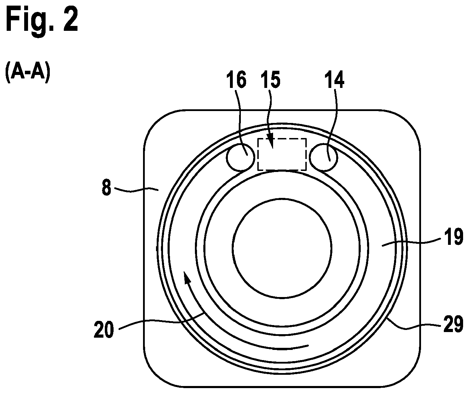

Des Weiteren weist das Gehäuse 3, insbesondere das Gehäuse-Oberteil 7 und/oder das Gehäuse-Unterteil 8 im Bereich des Verdichterraums 30 mindestens einen umlaufenden Seitenkanal 19 auf. Dabei verläuft der mindestens eine Seitenkanal 19 derart im Gehäuse 3 in Richtung der Drehachse 4, dass dieser axial zur Förderzelle 28 einseitig oder beidseitig verläuft. Der Seitenkanal 19 kann dabei zumindest in einem Teilbereich des Gehäuses 3 umlaufend um die Drehachse 4 verlaufen, wobei in dem Teilbereich, in dem der Seitenkanal 19 im Gehäuse 3 nicht ausgebildet ist, ein Unterbrecher-Bereich 15 im Gehäuse 3 ausgebildet ist (siehe **Fig.** 2).

Die Antriebswelle 9 ist mit einem Ende axial zur Drehachse 4 zumindest kardanisch mit dem Antrieb 6 verbunden. Dabei befindet sich das erstes Lager 18 am Außendurchmesser der Antriebswelle 9 axial im Bereich zwischen dem Antrieb 6 und dem Verdichterrad 2, insbesondere zwischen dem Antrieb 6 und dem Naben-Fuß 12 des Verdichterrads 2. Das erste Lager 18 befindet sich dabei zudem zwischen der Antriebswelle 9 und dem Gehäuse 3. In einer möglichen Ausführungsform weist die Antriebswelle 9 Absätze auf, die in axialer Richtung zu beiden Wellen-Enden hin verlaufen, ausgehend von Ihrem Außendurchmesser-Bereich, auf den das Verdichterrad 2 aufgebracht ist. Zusätzlich zum ersten Lager 18, bei dem es sich um ein Radiallager 18 handelt, wird der Verbund Antriebswelle 9 und Verdichterrad 2 von einem zweiten Lager 22 gelagert, wobei sich das zweite Lager 22 insbesondere zwischen dem Gehäuse 3 und dem Verdichterrad 2 befindet. Dabei steht das zweite Lager 22 an seinem Innendurchmesser mit dem äußeren Begrenzungsring 27 des Verdichterrads 2 in Kontakt. Das zweite Lager 22 ist dabei als ein Radiallager 22 oder als ein Axiallager 22 ausgebildet. Bei den Lagern 18, 22 kann es sich um Wälzlager 18, 22 handeln, insbesondere um Kugellager 28, 22. Somit wird eine Lagerung der drehbaren Bauteile des Seitenkanalverdichters 1 mittels des ersten Lagers 18 und des zweiten Lagers 22 realisiert wird, wobei sich das erste Lager 18 zwischen der Antriebswelle 9 und dem Gehäuse 3 befindet und sich das zweite Lager 22 zwischen dem Verdichterrad 2 und dem Gehäuse 3 befindet.

Der Antrieb 6 kann an seiner Oberfläche Kühlrippen aufweisen, die eine verbesserte Abführung der Wärmeenergie in die Umgebung bewirken. Wärme tritt im Antrieb 6 derart auf, dass durch das Antreiben des Verdichterrads 2 überschüssige Wärmeenergie entsteht, die insbesondere als Reibungswärme oder induktiv magnetische Wärme vorliegt. Diese Wärme kann aufgrund der Kühlrippen des Antriebs 6 schneller an die Umgebung abgeführt werden, da der Antrieb 6 durch die Kühlrippen eine vergrößerte Oberfläche aufweist.

In **Fig.** 1 ist darüber hinaus gezeigt, dass der Antrieb 6 einen axial zur Drehachse 4 verlaufenden Rotor 17 aufweist, wobei der Rotor 17 kraftschlüssig und/oder formschlüssig mit der Antriebswelle 9 verbunden ist, insbesondere mittels eines Pressverbands. Eine Kapselung des Rotors 17 gegen Umwelteinflüsse und/oder gegen Feuchtigkeit und Verschmutzung von außen wird durch den Einsatz eines Rotorgehäuses 41 erzielt. Weiterhin wird ein Entweichen von Wasserstoff aus dem Seitenkanalverdichter 1 in die Umgebung durch den Einsatz des Rotorgehäuses 41 verhindert. Zudem weist der Antrieb 6 einen um die Drehachse 4 umlaufenden Stator 11 auf, wobei der Stator 11 außerhalb und/oder umlaufend um den Rotor 17 angeordnet ist und/oder sich der Rotor 17 innerhalb des Innendurchmessers des Stators 11 befindet. Durch eine Bestromung des Stators 11 kann der Rotor 17 angetrieben werden und insbesondere in eine Rotationsbewegung versetzt werden. Eine Kapselung des Stators 11 gegen Umwelteinflüsse und/oder gegen Feuchtigkeit und Verschmutzung von außen wird durch den Einsatz eines Statorgehäuses 39 erzielt. Das Rotorgehäuse 41 und/oder das Statorgehäuse 39 können dabei am Gehäuse 3 des Seitenkanalverdichters 1 fixiert sein, insbesondere an das Gehäuse 3 angeschraubt sein. Weiterhin bildet das Gehäuse 3, insbesondere das Gehäuse-Unterteil 8, die Gas-Einlassöffnung 14 und die Gas-Auslassöffnung 16 aus. Dabei sind die Gas-Einlassöffnung 14 und die Gas-Auslassöffnung 16, insbesondere über den mindestens einen Seitenkanal 19, fluidisch miteinander verbunden.

Aufgrund der Paarungen der jeweiligen Anlaufflächen 23, 25, 29, 31 des Gehäuses 3 mit dem Verdichterrad 2 bilden sich zwischen dem Verdichterrad 2 und dem Gehäuse-Oberteil 7 und zwischen dem Verdichterrad 2 und dem Gehäuse-Unterteil jeweils ein äußerer Axialspalt 43 und ein innerer Axialspalt 45 aus.

Des Weiteren ist in **Fig.** 1 gezeigt, dass mittels der jeweiligen Axialspalte 43, 45 eine Kapselung der Förderzelle 28 und/oder des jeweiligen Seitenkanals 19a, b voneinander und/oder den jeweiligen Seitenkanal 19a, b von einem bezüglich der Drehachse 4 radial innenliegenden Bereich 50 und/oder einem bezüglich der Drehachse 4 radial außenliegenden Bereich 52 des Gehäuses 3 erfolgt. In bestimmten Betriebssituationen des Seitenkanalverdichters 1 kann ein zumindest teilweises und geringfügiges Hindurchbewegen des gasförmigen Mediums vom mindestens einen Seitenkanal 19 in den außenliegenden Bereich 52 zumindest zeitweise erfolgen. Durch die Kapselung wird verhindert, dass das gasförmige Medium aus dem Bereich der Förderzelle 28 und/oder den Seitenkanälen 19a, b in den innenliegenden Bereich 50 und/oder den außenliegenden Bereich 52 des Seitenkanalverdichters 1 vordringen kann. Dadurch wird weiterhin verhindert, dass die Bauteile Antrieb 6 und/oder Lager 18, 22 und/oder Antriebswelle 9 beschädigt werden. Im Falle des elektrischen Antriebs 6 kann ein Eindringen des schweren Bestandsteils Wasser oder von Wasserstoff zu einem Kurzschluss führen und/oder zu einer Schädigung der elektrischen oder weichmagnetischen Bauteile des Antriebs 6 führen. Dies kann den Betrieb des gesamten Seitenkanalverdichters 1 einschränken und sogar zu einem Ausfall führen. Weiterhin ist mittels der Axialspalte 43, 45 eine Erhöhung des Wirkungsgrads des Seitenkanalverdichters 1 möglich, je geringer die Größe des jeweiligen Axialspalts 43, 45 desto höher der erzielbare Wirkungsgrad des Seitenkanalverdichters 1.

Wie in **Fig.** 1 gezeigt ist eine Tellerfeder 5 axial zur Drehachse zwischen dem Gehäuse-Oberteil 7 und dem ersten Lager 18 angeordnet. In weiteren Ausführungsbeispielen kann die Tellerfeder 5 auch zwischen dem ersten Lager 18 dem zweiten Lager 22, dem Verdichterrad 2 und dem Gehäuse 3, insbesondere dem Gehäuse-Oberteil 7 oder dem Gehäuse-Unterteil 8 befinden. Mittels der Tellerfeder 5 wird das erste Lager 18 und/oder das zweite Lager 22 mit einer Lagervorspannung versehen, wobei sich insbesondere die Tellerfeder 5 zwischen dem Gehäuse-Oberteil 7 und dem ersten Lager 18 befindet und wobei die axial zur Drehachse 4 verlaufende Lagervorspannkraft mittels der Tellerfeder 5 vom ersten Lager 18 auf das Gehäuse-Oberteil 7 übertragen wird.

Zudem ist in **Fig.** 1 gezeigt, dass der umlaufende zylindrische Ansatz 32 in Richtung der Drehachse 4 in eine Aussparung des Gehäuse-Oberteils 7 hineinragt. Dabei weist der umlaufende zylindrische Ansatz 32 eine in Richtung der Drehachse 4 und dem Gehäuse-Oberteil 7 zugewandte erste Anlagefläche 33 auf. In einer alternativen, nicht beanspruchten Ausführungsform kann sich der zylindrische Ansatz 32 auch am Gehäuse-Oberteil 7 befinden und in eine Aussparung des Gehäuse-Unterteils 8 hineinragen. Des Weiteren befindet sich eine Abstandsscheibe 35 zwischen der ersten Anlagefläche 33 des umlaufenden zylindrischen Ansatzes 32 und der zweiten Anlauffläche 25 des Gehäuse-Oberteils 7.

Die axial zur Drehachse 4 verlaufende Lagervorspannkraft, die auf das erste Lager 18 und/oder auf das zweite Lager 22 wirkt, kann erfindungsgemäß mittels dieser Abstandsscheibe 35 eingestellt werden, wobei sich die Abstandsscheibe 35 axial zur Drehachse 4 zwischen dem zylindrischen Ansatz 32 und dem Gehäuse-Oberteil 7 befindet. Durch eine entsprechende Bearbeitung der Oberflächen der Abstandsscheibe 35 vor der Montage kann somit der Abstand des Gehäuse-Unterteils 8 und des Gehäuse-Oberteils 7, insbesondere der ersten Anlauffläche 23 und der zweiten Anlauffläche 25 zueinander eingestellt werden, indem das in Richtung der Drehachse 4 verlaufende Maß der Abstandsscheibe 35 verändert wird. Dadurch kann auch der Abstand der zweiten Anlauffläche 25 des Gehäuse-Oberteils 7 zur dritten Anlauffläche 29 des Verdichterrads 2 und der Abstand der ersten Anlauffläche 23 des Gehäuse-Unterteils 8 zur vierten Anlauffläche 31 des Verdichterrads 2 eingestellt werden. Dabei wird die Lagervorspannkraft mittels eines Verbindens, insbesondere Verschraubens, des Gehäuse-Oberteils 7 und des Gehäuse-Unterteils 8 erzeugt, wobei die Lagervorspannkraft axial zur Drehachse 4 vom Gehäuse-Unterteil 8 auf das zweite Lager 22, vom zweiten Lager 22 auf das Verdichterrad 2, vom Verdichterrad 2 auf das erste Lager 18 und vom ersten Lager 18 auf das Gehäuse-Oberteil 7 übertragen wird. Zudem kann mittels der Abstandsscheibe 35 zusätzlich zur Lagervorspannkraft das Spaltmaß eines ersten Spaltbereichs 43 und/oder eines zweiten Spaltbereichs 45 zwischen dem Verdichterrad 2 und dem Gehäuse 3 eingestellt werden, wodurch sich eine verbesserte Kapselung des Verdichterraums 30 erzielen lässt. Durch die verbesserte Kapselung kann der Verlust vom gasförmigen zu fördernden Medium, bei dem es sich insbesondere um Wasserstoff handelt, aus dem Verdichterraum 30 reduziert werden.

In **Fig.** 1 ist zudem gezeigt, dass das Verdichterrad 2 an seinem der Drehachse 4 abgewandten Außenrand, insbesondere dem äußeren Begrenzungsring 27, einen ringförmigen um die Drehachse 4 umlaufenden Steg 38 aufweist. Das zweite Lager 22 befindet sich dabei axial zur Drehachse 4 zwischen dem umlaufenden Steg 38 und dem Gehäuse-Unterteil 8. Mittels des umlaufenden Stegs 38 am Verdichterrad 2 können axial zur Drehachse 4 verlaufende Kräfte mittels des zweiten Lagers 22, das insbesondere als Axiallager ausgebildet ist, in das Gehäuse 3, insbesondere das Gehäuse-Unterteil 8 abgeleitet werden. Weiterhin kann das Verdichterrad 2 mit seinem Naben-Fuß 12 eine axial zur Drehachse 4 verlaufende Lagervorspannkraft vom ersten Lager 18 aufnehmen. Dabei befindet sich eine zweite Anlagefläche 34 axial zur Drehachse zwischen dem ersten Lager 18 und dem Naben-Fuß 12. Des Weiteren kann die axial zur Drehachse 4 verlaufenden Dicke des Stegs 38 mittels abtragender Bearbeitung derart angepasst werden, dass eine optimale Führung des Verdichterrads 2 erzielt werden kann, indem sich der Steg 38 auch an eine unterschiedliche Lagerbreite 24 des zweiten Lagers 22 anpassen lässt.

Zudem ist in **Fig**. 1 gezeigt, dass das zweite Lager 22 einen mittleren Lagerdurchmesser 36 aufweist, wobei der mittlere Lagerdurchmesser 36 des zweiten Lagers 22 in diesem ersten Ausführungsbeispiel größer ist als der mittlere Lagerdurchmesser 36 des ersten Lagers 18. Hierdurch kann eine verbesserte und präzisere Führung des Verdichterrads 2 erzielt werden.

**Fig.** 2 zeigt einen in **Fig**. 1 mit A-A bezeichneten Schnitt des Seitenkanalverdichters 1 in vergrößerter Darstellung bei dem das Gehäuse-Unterteil 8, die Gas-Einlassöffnung 14, die Gas-Auslassöffnung 16, der Unterbrecher-Bereich 15, der Seitenkanal 19 und eine Drehrichtung 20 (des nicht dargestellten Verdichterrads 2) dargestellt sind.

Wie in **Fig.** 2 dargestellt befindet sich der Unterbrecher-Bereich 15 umlaufend um die Drehachse 4 im Gehäuse 3 insbesondere zwischen der Gas-Einlassöffnung 14 und der Gas-Auslassöffnung 16. Das gasförmige Medium wird durch das Verdichterrad 2 gefördert und/oder strömt dabei von der Gas-Einlassöffnung 14 zur Gas-Auslassöffnung 16 und durchströmt dabei, zumindest teilweise, den Seitenkanal 19. Dabei erhöht sich mit fortschreitendem Umlauf von der Gas-Einlassöffnung 14 zur Gas-Auslassöffnung 16 in Drehrichtung 20 die Verdichtung und/oder der Druck und/oder die Strömungsgeschwindigkeit des gasförmigen Mediums in der Förderzelle 28, insbesondere in der Förderzelle 28 des Verdichterrads 2 und im Seitenkanal 19. Durch den Unterbrecher-Bereich 15 wird eine Trennung einer Druckseite und einer Saugseite bewirkt, wobei sich die Saugseite im Bereich der Gas-Einlassöffnung 14 befindet und die Druckseite im Bereich der Gas-Auslassöffnung 16 befindet.

In **Fig**. 3 ist ein Längsschnitt durch den rotationssymmetrisch zu der Drehachse 4 ausgebildeten Seitenkanalverdichter 1 gemäß einem zweiten Ausführungsbeispiel gezeigt. Dabei ist dargestellt, dass sich das erste Lager 18 im Gehäuse-Oberteil 7 auf der dem Antrieb 6 zugewandten Seite des Verdichterrads 2 befindet. Das erste Lager 18 steht dabei an seinem Innendurchmesser mit der Antriebswelle 9 in Kontakt. Dabei kann das erste Lager 18 axial zur Drehachse 4 mit der Antriebswelle 9 in Anlage stehen oder mittels eines Pressverbands mit der Antriebswelle 9 verbunden sein. Mit dem Außendurchmesser steht das erste Lager 18 mit dem Gehäuse-Oberteil 7 in Kontakt, wobei das erste Lager 18 in das Gehäuse-Oberteil 7 eingepresst sein kann. An der dem Antrieb 6 zugewandten Stirnseite steht das erste Lager zumindest teilweise mit einem Absatz des Gehäuse-Oberteils 7 in Kontakt, insbesondere mit dem Lageraußenring. Weiterhin steht das erste Lager 18 auf der dem Antrieb 6 abgewandten Stirnfläche mit der Tellerfeder 5 in Kontakt, insbesondere mit seinem Lagerinnenring und/oder mit dem Lageraußenring. Dabei übt die Tellerfeder eine Lagervorspannkraft auf das erste Lager 18 aus. Die Verdichterrad-Nabe 10 mit dem Naben-Fuß 12 ist in diesem zweiten Ausführungsbeispiel auf der dem Antrieb 6 abgewandten Seite am Verdichterrad 2 angeordnet. Weiterhin befindet sich das zweite Lager 22 mit seinem Außendurchmesser mit dem Verdichterrad 2 in Anlage, insbesondere mit dem Innendurchmesser des inneren Begrenzungsrings 21 des Verdichterrads 2. Axial zur Drehachse 4 befindet sich das zweite Lager 22 auf der dem Antrieb 6 zugewandten Seite mit der Nabenscheibe 13 des Verdichterrads 2 in Kontakt und auf der dem Antrieb 6 abgewandten Seite mit dem Gehäuse-Unterteil 8 in Kontakt. Dabei kann die Tellerfeder 5 axial zur Drehachse 4 zumindest mittelbar über das Verdichterrad 2 eine Lagervorspannkraft auf das zweite Lager 22 übertragen. Das zweite Lager 22 bildet in diesem zweiten Ausführungsbeispiel des Seitenkanalverdichters 1 den mittleren Lagerdurchmesser 36 aus, wobei dieser mittlere Lagerdurchmesser 36 geringer ist als im ersten Ausführungsbeispiel. Auch in diesem zweiten Ausführungsbeispiel befindet sich zwischen der ersten Anlagefläche 33 des umlaufenden zylindrischen Ansatzes 32 und der zweiten Anlauffläche 25 des Gehäuse-Oberteils 7 die Abstandsscheibe 35. Die axial zur Drehachse 4 verlaufende Lagervorspannkraft, die auf das erste Lager 18 und/oder auf das zweite Lager 22 wirkt, kann mittels dieser Abstandsscheibe 35 eingestellt werden, wobei sich die Abstandsscheibe 35 axial zur Drehachse 4 zwischen dem zylindrischen Ansatz 32 und dem Gehäuse-Oberteil 7 befindet. Zudem ist auch für die folgenden Ausführungsbeispiele eine Einstellung der Lagervorspannkraft mittels der Abstandsscheibe 35 vorgesehen.

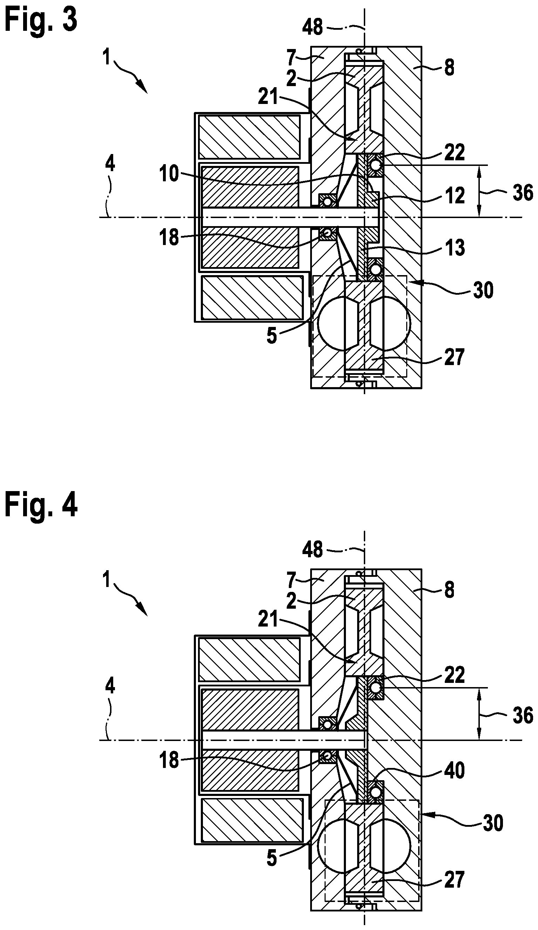

**Fig.** 4 zeigt eine schematische Schnittansicht des erfindungsgemäßen Seitenkanalverdichters 1 gemäß einem dritten Ausführungsbeispiel. Dabei weist das Gehäuse-Unterteil 8 einen um die Drehachse 4 umlaufenden Absatz 40 auf, wobei sich das zweite Lager 22 zwischen dem Verdichterrad 2 und dem umlaufenden Absatz 40 befindet und wobei das zweite Lager 22 insbesondere mittels einer Pressverbands radial zur Drehachse 4 mit dem Absatz 40 in Kontakt steht. Das zweite Lager 22 steht mit seinem Innendurchmesser mit dem Gehäuse-Unterteil 8 und/oder mit seiner dem Antrieb 6 abgewandten Stirnfläche in Kontakt und das zweite Lager 22 steht mit seinem Außendurchmesser mit dem Verdichterrad 2 in Anlage, insbesondere mit dem Innendurchmesser des inneren Begrenzungsrings 21 des Verdichterrads 2. Dabei kann das zweite Lager 22 als ein Radiallager 22 ausgebildet sein.

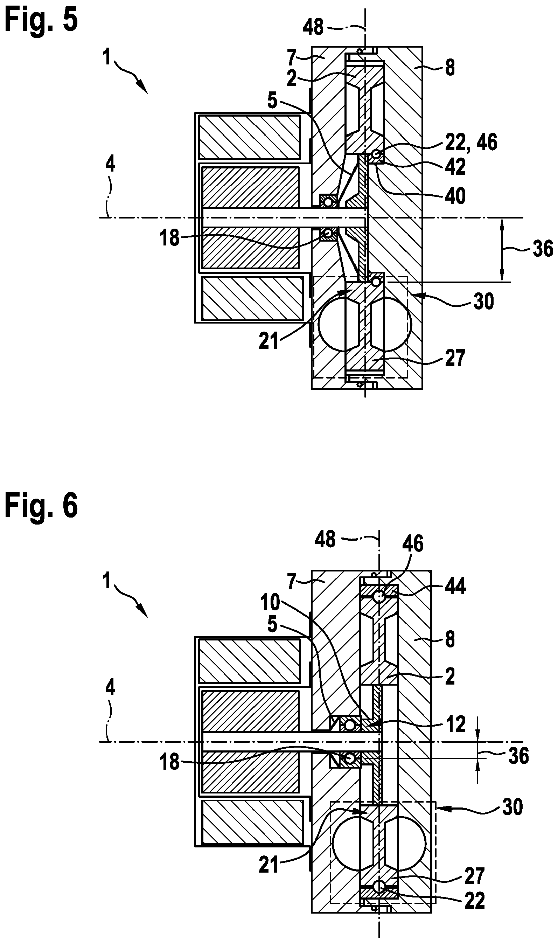

In **Fig.** 5 ist gezeigt, dass der Seitenkanalverdichter 1 den Absatz 40 aufweist, ähnlich dem in **Fig.** 4 beschrieben Absatz 40. Dabei weist das zweite Lager 22 nur einen Lagerinnenring 42 auf, wobei ein Wälzkörper 46 des zweiten Lagers 22 zum einen auf dem Lagerinnenring 42 und zum anderen direkt an einem Innendurchmesser, insbesondere einer gehärteten Lagerlaufbahn, des Verdichterrads 2 abrollt. Somit kann ein Lageraußenring 44 des zweiten Lagers 22 in diesem vierten Ausführungsbeispiel eingespart werden, wobei sich die Komplexität des Seitenkanalverdichters 1 reduziert. Die gehärtete Lagerlaufbahn wird direkt auf Innendurchmesser des inneren Begrenzungsrings 21 des Verdichterrads 2 aufgebracht, insbesondere auf dem der Drehachse 4 zugewandten Bereich des inneren Begrenzungsrings 21, wodurch der Lageraußenring 44 des zweiten Lagers 22 obsolet wird. Ein weiterer Vorteil dieser Ausführungsform ist eine vereinfachte Montage aufgrund weniger Bauteile und eine Reduzierung der bewegten Massen. Dabei kann die Tellerfeder 5 axial zur Drehachse 4 zumindest mittelbar über das Verdichterrad 2 eine Lagervorspannkraft auf das zweite Lager 22 übertragen, wobei sich die Tellerfeder 5 zwischen dem ersten Lager 18 und dem Verdichterrad 2, insbesondere der Naben-Scheibe 13 des Verdichterrads 2, befindet. Das zweite Lager 22 bildet in diesem vierten Ausführungsbeispiel des Seitenkanalverdichters 1 den mittleren Lagerdurchmesser 36 aus, wobei dieser mittlere Lagerdurchmesser 36 zumindest annähernd dem Innendurchmesser des inneren Begrenzungsrings 21 entspricht.

**Fig.** 6 zeigt, dass sich das zweite Lager 22 an einem Außendurchmesser des Verdichterrads 2 befindet und wobei sich das zweite Lager 22 radial zur Drehachse 4 zwischen dem Verdichterrad 2 und dem Gehäuse-Unterteil 8 befindet. Dabei weist bei diesem fünften Ausführungsbeispiel des Seitenkanalverdichters 1 das zweite Lager 22 nur den Lageraußenring 44 auf, wobei der Wälzkörper 46 des zweiten Lagers 22 zum einen auf dem Lageraußenring 42 und zum anderen direkt an einem Außendurchmesser, insbesondere einer gehärteten Lagerlaufbahn, des Verdichterrads 2 abrollt. Somit kann der Lagerinnenring 42 des zweiten Lagers 22 in diesem fünften Ausführungsbeispiel eingespart werden, wobei sich die Komplexität des Seitenkanalverdichters 1 reduziert. Die gehärtete Lagerlaufbahn wird direkt auf den Außendurchmesser des äußeren Begrenzungsrings 27 des Verdichterrads 2 verlagert, wodurch der Lagerinnenring 42 des zweiten Lagers 22 obsolet wird. Ein weiterer Vorteil dieser Ausführungsform ist eine vereinfachte Montage aufgrund weniger Bauteile und eine Reduzierung der bewegten Massen. Dabei ist die Tellerfeder 5 zwischen dem Gehäuse-Oberteil 7 und dem ersten Lager 18 angeordnet, wobei das erste Lager 18 auf der dem Gehäuse-Oberteil 7 abgewandten Seite mit dem Naben-Fuß 12 des Verdichterrads 2 in Kontakt steht. Somit kann die Tellerfeder 5 axial zur Drehachse 4 zumindest mittelbar über das erste Lager 18 und den Naben-Fuß 12 des Verdichterrads 2 eine Lagervorspannkraft auf das zweite Lager 22 übertragen, wobei sich die Tellerfeder 5 zwischen dem ersten Lager 18 und dem Verdichterrad 2, insbesondere der Naben-Scheibe 13 des Verdichterrads 2, befindet.

In einer weiteren Ausführungsform der zuvor beschriebenen Ausführungsbeispiele, bei dem das Verdichterrad 2 den umlaufenden Steg 38 aufweist und bei dem das zweite Lager 22 insbesondere als eine Radiallager ausgeführt ist, kann der umlaufende Steg 38 dabei in Richtung der Symmetrieachse 48 gestuft ausgeführt sein, so dass der Steg 38 entweder auf den Lagerinnenring 42 oder den Lageraußenring 44 wirkt. Hierbei kann das Gehäuse-Unterteil 8 zusätzlich in Richtung der Symmetrieachse 48 gestuft ausgeführt sein, so dass das Gehäuse-Unterteil 8 entweder auf den Lagerinnenring 42 oder den Lageraußenring 44 wirkt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen. Der Schutzbereich der Erfindung ist durch die nachfolgenden Ansprüche bestimmt.

## Patentansprüche

1. Seitenkanalverdichter (1) für ein Brennstoffzellensystem (37) zur Förderung und/oder Verdichtung eines gasförmigen Mediums, insbesondere Wasserstoff, mit einem Gehäuse (3), mit einem in dem Gehäuse (3) befindlichen Verdichterraum (30), der mindestens einen umlaufenden Seitenkanal (19) aufweist, mit einem in dem Gehäuse (3) befindlichen Verdichterrad (2), das auf einer um eine Drehachse (4) drehbaren Antriebswelle (9) angeordnet ist, wobei das Verdichterrad (2) an seinem Umfang im Bereich des Verdichterraums (30) angeordnete Förderzellen (28) aufweist, und mit jeweils einer am Gehäuse (3) ausgebildeten Gas-Einlassöffnung (14) und einer Gas-Auslassöffnung (16), die über den Verdichterraum (30), insbesondere zwei Seitenkanäle (19a, b), fluidisch miteinander verbunden sind, wobei das Gehäuse (3) eine erste und zweite Anlauffläche (23, 25) jeweils dem Verdichterrad (2) zugewandt und axial zur Drehachse (4) verlaufend aufweist und wobei sich in diesen Bereichen jeweils ein innerer und ein äußerer Axialspalt (43, 45) zwischen dem Gehäuse (3) und dem Verdichterrad (2) ausbildet, wobei eine Lagerung der drehbaren Bauteile des Seitenkanalverdichters (1) mittels eines ersten Lagers (18) und eines zweiten Lagers (22) realisiert wird, wobei sich das erste Lager (18) zwischen der Antriebswelle (9) und dem Gehäuse (3) befindet und sich das zweite Lager (22) zwischen dem Verdichterrad (2) und dem Gehäuse (3) befindet, wobei das Gehäuse (3) ein Gehäuse-Oberteil (7) und ein Gehäuse-Unterteil (8) aufweist, wobei das Gehäuse-Unterteil (8) einen um die Drehachse (4) umlaufenden zylindrischen Ansatz (32) aufweist, **dadurch gekennzeichnet, dass** eine axial zur Drehachse (4) verlaufende Lagervorspannkraft, die auf das erste Lager (18) und/oder auf das zweite Lager (22) wirkt, mittels einer Abstandsscheibe (35) eingestellt wird, wobei sich die Abstandsscheibe (35) axial zur Drehachse (4) zwischen dem zylindrischen Ansatz (32) und dem Gehäuse-Oberteil (7) befindet.

2. Seitenkanalverdichter (1) gemäß Anspruch 1, **dadurch gekennzeichnet, dass** das erste Lager (18) als ein Radiallager und das zweite Lager (22) als ein Axiallager ausgeführt ist.

3. Seitenkanalverdichter (1) gemäß Anspruch 1, **dadurch gekennzeichnet, dass** das erste Lager (18) als ein Radiallager und das zweite Lager (22) als ein Radiallager ausgeführt ist.

4. Seitenkanalverdichter (1) gemäß Anspruch 1, **dadurch gekennzeichnet, dass** die Lagervorspannkraft mittels eines Verbindens, insbesondere Verschraubens, des Gehäuse-Oberteils (7) und des Gehäuse-Unterteils (8) erzeugt wird und wobei die Lagervorspannkraft axial zur Drehachse (4) vom Gehäuse-Unterteil (8) auf das zweite Lager (22), vom zweiten Lager (22) auf das Verdichterrad (2), vom Verdichterrad (2) auf das erste Lager (18) und vom ersten Lager (18) auf das Gehäuse-Oberteil (7) übertragen wird.

5. Seitenkanalverdichter (1) gemäß Anspruch 4, **dadurch gekennzeichnet, dass** das Verdichterrad (2) an seinem der Drehachse (4) abgewandten Außenrand, insbesondere einem äußeren Begrenzungsring (27), einen ringförmigen um die Drehachse (4) umlaufenden Steg (38) aufweist, wobei sich das zweite Lager (22) axial zur Drehachse (4) auf der dem ersten Lager (18) abgewandten Seite zwischen dem umlaufenden Steg (38) und dem Gehäuse-Unterteil (8) befindet.

6. Seitenkanalverdichter (1) gemäß Anspruch 4, **dadurch gekennzeichnet, dass** das Verdichterrad (2) an seinem Innendurchmesser eine Verdichterrad-Nabe (10) mit einem Naben-Fuß (12) aufweist, wobei das Verdichterrad (2) mittels des Naben-Fußes (12) die axial zur Drehachse (4) verlaufende Lagervorspannkraft auf das erste Lager (18) überträgt.

7. Seitenkanalverdichter (1) gemäß Anspruch 1, **dadurch gekennzeichnet, dass** mittels der Abstandsscheibe (35) zusätzlich zur Lagervorspannkraft das Spaltmaß eines ersten Spaltbereichs (43) und/oder eines zweiten Spaltbereichs (45) zwischen dem Verdichterrad (2) und dem Gehäuse (3) eingestellt werden kann.

8. Seitenkanalverdichter (1) gemäß Anspruch 4, **dadurch gekennzeichnet, dass** sich eine Tellerfeder (5) zwischen dem Gehäuse-Oberteil (7) und dem ersten Lager (18) befindet, wobei die axial zur Drehachse (4) verlaufende Lagervorspannkraft mittels der Tellerfeder (5) vom ersten Lager (18) auf das Gehäuse-Oberteil (7) übertragen wird.

9. Seitenkanalverdichter (1) gemäß Anspruch 4, **dadurch gekennzeichnet, dass** sich eine Tellerfeder (5) zwischen dem ersten Lager (18) und dem Verdichterrad (2) befindet, wobei die axial zur Drehachse (4) verlaufende Lagervorspannkraft mittels der Tellerfeder (5) vom Verdichterrad (2) auf das erste Lager (18) übertragen wird.

10. Seitenkanalverdichter (1) gemäß Anspruch 3, **dadurch gekennzeichnet, dass** das Gehäuse-Unterteil (8) einen um die Drehachse (4) umlaufenden Absatz (40) aufweist, wobei sich das zweite Lager (22) zwischen dem Verdichterrad (2) und dem umlaufenden Absatz (40) befindet und wobei das zweite Lager (22) insbesondere mittels einer Pressverbands radial zur Drehachse (4) mit dem Absatz (40) in Kontakt steht.

11. Seitenkanalverdichter (1) gemäß Anspruch 4, **dadurch gekennzeichnet, dass** das zweite Lager (22) nur einen Lagerinnenring (42) aufweist, wobei ein Wälzkörper (46) des zweiten Lagers (22) zum einen auf dem Lagerinnenring (42) und zum anderen direkt an einem Innendurchmesser, insbesondere einer gehärteten Lagerlaufbahn, des Verdichterrads (2) abrollt.

12. Seitenkanalverdichter (1) gemäß Anspruch 4, **dadurch gekennzeichnet, dass** das zweite Lager (22) nur einen Lageraußenring (44) aufweist, wobei ein Wälzkörper (46) des zweiten Lagers (22) zum einen auf dem Lageraußenring (44) und zum anderen direkt an einem Außendurchmesser, insbesondere einer gehärteten Lagerlaufbahn, des Verdichterrads (2) abrollt.

13. Seitenkanalverdichter (1) gemäß Anspruch 5 und/oder 12, **dadurch gekennzeichnet, dass** sich das zweite Lager (22) an einem Außendurchmesser des Verdichterrads (2) befindet und wobei sich das zweite Lager (22) radial zur Drehachse (4) zwischen dem Verdichterrad (2) und dem Gehäuse-Unterteil (8) befindet.

## Claims

1. Side-channel compressor (1) for a fuel cell system (37) for conveying and/or compressing a gaseous medium, in particular hydrogen, having a housing (3), having a compressor chamber (30) which is situated in the housing (3) and has at least one encircling side channel (19), having a compressor wheel (2) which is situated in the housing (3) and is disposed on a drive shaft (9) rotatable about a rotation axis (4), wherein the compressor wheel (2) on the circumference thereof has conveyor cells (28) that are disposed in the region of the compressor chamber (30), and having a gas inlet opening (14) and a gas outlet opening (16) which are in each case configured on the housing (3) and by way of the compressor chamber (30), in particular two side channels (19a,b), are fluidically connected to one another, wherein the housing (3) has a first and second approach surface (23, 25), each facing the compressor wheel (2) and running axially to the rotation axis (4), and wherein configured in these regions are in each case one inner and one outer axial gap (43, 45) between the housing (3) and the compressor wheel (2), wherein mounting of the rotatable components of the side-channel compressor (1) is implemented by means of a first bearing (18) and a second bearing (22), wherein the first bearing (18) is situated between the drive shaft (9) and the housing (3), and the second bearing (22) is situated between the compressor wheel (2) and the housing (3), wherein the housing (3) has a housing upper part (7) and a housing lower part (8), wherein the housing lower part (8) has a cylindrical appendage (32) encircling the rotation axis (4), **characterized in that** a bearing preloading force, which runs axially to the rotation axis (4) and acts on the first bearing (18) and/or on the second bearing (22), is adjusted by means of a spacer disc (35), wherein the spacer disc (35) is situated axially to the rotation axis (4) between the cylindrical appendage (32) and the housing upper part (7).

2. Side-channel compressor (1) according to Claim 1, **characterized in that** the first bearing (18) is embodied as a radial bearing, and the second bearing (22) is embodied as an axial bearing.

3. Side-channel compressor (1) according to Claim 1, **characterized in that** the first bearing (18) is embodied as a radial bearing, and the second bearing (22) is embodied as a radial bearing.

4. Side-channel compressor (1) according to Claim 1, **characterized in that** the bearing preloading force is generated by means of connecting, in particular screwing, the housing upper part (7) to the housing lower part (8), and wherein the bearing preloading force is transmitted axially to the rotation axis (4) from the housing lower part (8) to the second bearing (22), from the second bearing (22) to the compressor wheel (2), from the compressor wheel (2) to the first bearing (18), and from the first bearing (18) to the housing upper part (7).

5. Side-channel compressor (1) according to Claim 4, **characterized in that** the compressor wheel (2) on the external periphery thereof facing away from the rotation axis (4), in particular an outer delimitation ring (27), has an annular web (38) encircling the rotation axis (4), wherein the second bearing (22) is situated axially to the rotation axis (4) on that side between the encircling web (38) and the housing lower part (8) that faces away from the first bearing (18).

6. Side-channel compressor (1) according to Claim 4, **characterized in that** the compressor wheel (2) on the internal diameter thereof has a compressor wheel hub (10) having a hub foot (12), wherein the compressor wheel (2) by means of the hub foot (12) transmits the bearing preloading force to the first bearing (18), said bearing preloading force running axially to the rotation axis (4).

7. Side-channel compressor (1) according to Claim 1, **characterized in that** the gap size of a first gap region (43) and/or of a second gap region (45) between the compressor wheel (2) and the housing (3) can be set by means of the spacer disc (35) in addition to the bearing preloading force.

8. Side-channel compressor (1) according to Claim 4, **characterized in that** a plate spring (5) is situated between the housing upper part (7) and the first bearing (18), wherein the bearing preloading force, which runs axially to the rotation axis (4), is transmitted from the first bearing (18) to the housing upper part (7) by means of the plate spring (5) .

9. Side-channel compressor (1) according to Claim 4, **characterized in that** a plate spring (5) is situated between the first bearing (18) and the compressor wheel (2), wherein the bearing preloading force, which runs axially to the rotation axis (4), is transmitted from the compressor wheel (2) to the first bearing (18) by means of the plate spring (5).

10. Side-channel compressor (1) according to Claim 3, **characterized in that** the housing lower part (8) has a shoulder (40) encircling the rotation axis (4), wherein the second bearing (22) is situated between the compressor wheel (2) and the encircling shoulder (40), and wherein the second bearing (22) radially to the rotation axis (4) is in contact with the shoulder (40) by means of an interference fit assembly.

11. Side-channel compressor (1) according to Claim 4, **characterized in that** the second bearing (22) has only a bearing inner ring (42), wherein a rolling member (46) of the second bearing (22) rolls on the bearing inner ring (42), on the one hand, and directly on an internal diameter, in particular a hardened bearing raceway, of the compressor wheel (2), on the other hand.

12. Side-channel compressor (1) according to Claim 4, **characterized in that** the second bearing (22) has only a bearing outer ring (44), wherein a rolling member (46) of the second bearing (22) rolls on the bearing outer ring (44), on the one hand, and directly on an external diameter, in particular a hardened bearing raceway, of the compressor wheel (2), on the other hand.

13. Side-channel compressor (1) according to Claim 5 and/or 12, **characterized in that** the second bearing (22) is situated on an external diameter of the compressor wheel (2), and wherein the second bearing (22) radially to the rotation axis (4) is situated between the compressor wheel (2) and the housing lower part (8).

## Revendications

1. Compresseur à canal latéral (1) pour un système de pile à combustible (37) pour le transport et/ou la compression d'un milieu gazeux, notamment d'hydrogène, avec un boîtier (3), avec une chambre de compresseur (30) se trouvant dans le boîtier (3), qui présente au moins un canal latéral périphérique (19), avec une roue de compresseur (2) se trouvant dans le boîtier (3), qui est agencée sur un arbre d'entraînement (9) rotatif autour d'un axe de rotation (4), la roue de compresseur (2) présentant sur sa circonférence des cellules de transport (28) agencées dans la zone de la chambre de compresseur (30), et avec respectivement une ouverture d'entrée de gaz (14) et une ouverture de sortie de gaz (16) formées sur le boîtier (3), qui sont reliées fluidiquement entre elles par l'intermédiaire de la chambre de compresseur (30), notamment deux canaux latéraux (19a, b), le boîtier (3) présentant une première et une deuxième surface d'attaque (23, 25) respectivement tournées vers la roue de compresseur (2) et s'étendant axialement par rapport à l'axe de rotation (4), et dans ces zones se formant respectivement une fente axiale intérieure et une fente axiale extérieure (43, 45) entre le boîtier (3) et la roue de compresseur (2), un montage des composants rotatifs de compresseur à canal latéral (1) étant réalisé au moyen d'un premier palier (18) et d'un deuxième palier (22), le premier palier (18) se trouvant entre l'arbre d'entraînement (9) et le boîtier (3) et le deuxième palier (22) se trouvant entre la roue de compresseur (2) et le boîtier (3), le boîtier (3) présentant une partie supérieure de boîtier (7) et une partie inférieure de boîtier (8), la partie inférieure de boîtier (8) présentant un appendice cylindrique (32) périphérique autour de l'axe de rotation (4), **caractérisé en ce qu'**une force de précontrainte de palier s'étendant axialement par rapport à l'axe de rotation (4), qui agit sur le premier palier (18) et/ou sur le deuxième palier (22), est ajustée au moyen d'un disque d'écartement (35), le disque d'écartement (35) se trouvant axialement par rapport à l'axe de rotation (4) entre l'appendice cylindrique (32) et la partie supérieure de boîtier (7).

2. Compresseur à canal latéral (1) selon la revendication 1, **caractérisé en ce que** le premier palier (18) est conçu sous la forme d'un palier radial et le deuxième palier (22) sous la forme d'un palier axial.

3. Compresseur à canal latéral (1) selon la revendication 1, **caractérisé en ce que** le premier palier (18) est conçu sous la forme d'un palier radial et le deuxième palier (22) sous la forme d'un palier radial.

4. Compresseur à canal latéral (1) selon la revendication 1, **caractérisé en ce que** la force de précontrainte de palier est générée au moyen d'un assemblage, notamment d'un vissage, de la partie supérieure de boîtier (7) et de la partie inférieure de boîtier (8), et dans lequel la force de précontrainte de palier est transmise axialement par rapport à l'axe de rotation (4) de la partie inférieure de boîtier (8) au deuxième palier (22), du deuxième palier (22) à la roue de compresseur (2), de la roue de compresseur (2) au premier palier (18) et du premier palier (18) à la partie supérieure de boîtier (7).

5. Compresseur à canal latéral (1) selon la revendication 4, **caractérisé en ce que** la roue de compresseur (2) présente, sur son bord extérieur détourné de l'axe de rotation (4), notamment une bague de délimitation extérieure (27), une entretoise annulaire (38) périphérique autour de l'axe de rotation (4), le deuxième palier (22) se trouvant, axialement par rapport à l'axe de rotation (4), sur le côté détourné du premier palier (18), entre l'entretoise périphérique (38) et la partie inférieure de boîtier (8).

6. Compresseur à canal latéral (1) selon la revendication 4, **caractérisé en ce que** la roue de compresseur (2) présente sur son diamètre intérieur un moyeu de roue de compresseur (10) avec un pied de moyeu (12), la roue de compresseur (2) transmettant au premier palier (18), au moyen du pied de moyeu (12), la force de précontrainte de palier s'étendant axialement par rapport à l'axe de rotation (4).

7. Compresseur à canal latéral (1) selon la revendication 1, **caractérisé en ce que** le disque d'écartement (35) permet d'ajuster, en plus de la force de précontrainte de palier, la mesure de fente d'une première zone de fente (43) et/ou d'une deuxième zone de fente (45) entre la roue de compresseur (2) et le boîtier (3) .

8. Compresseur à canal latéral (1) selon la revendication 4, **caractérisé en ce qu'**une rondelle-ressort (5) se trouve entre la partie supérieure de boîtier (7) et le premier palier (18), la force de précontrainte de palier s'étendant axialement par rapport à l'axe de rotation (4) étant transmise au moyen de la rondelle-ressort (5) du premier palier (18) à la partie supérieure de boîtier (7).

9. Compresseur à canal latéral (1) selon la revendication 4, **caractérisé en ce qu'**une rondelle-ressort (5) se trouve entre le premier palier (18) et la roue de compresseur (2), la force de précontrainte de palier s'étendant axialement par rapport à l'axe de rotation (4) étant transmise de la roue de compresseur (2) au premier palier (18) au moyen de la rondelle-ressort (5).

10. Compresseur à canal latéral (1) selon la revendication 3, **caractérisé en ce que** la partie inférieure de boîtier (8) présente un épaulement (40) périphérique autour de l'axe de rotation (4), le deuxième palier (22) se trouvant entre la roue de compresseur (2) et l'épaulement périphérique (40), et le deuxième palier (22) étant en contact avec l'épaulement (40), notamment au moyen d'une liaison par pression radialement par rapport à l'axe de rotation (4).

11. Compresseur à canal latéral (1) selon la revendication 4, **caractérisé en ce que** le deuxième palier (22) ne présente qu'une bague intérieure de palier (42), un corps de roulement (46) du deuxième palier (22) roulant d'une part sur la bague intérieure de palier (42) et d'autre part directement sur un diamètre intérieur, notamment une piste de roulement de palier durcie, de la roue de compresseur (2).

12. Compresseur à canal latéral (1) selon la revendication 4, **caractérisé en ce que** le deuxième palier (22) ne présente qu'une bague extérieure de palier (44), un corps de roulement (46) du deuxième palier (22) roulant d'une part sur la bague extérieure de palier (44) et d'autre part directement sur un diamètre extérieur, notamment une piste de roulement de palier durcie, de la roue de compresseur (2).

13. Compresseur à canal latéral (1) selon la revendication 5 et/ou 12, **caractérisé en ce que** le deuxième palier (22) se trouve sur un diamètre extérieur de la roue de compresseur (2) et dans lequel le deuxième palier (22) se trouve radialement par rapport à l'axe de rotation (4) entre la roue de compresseur (2) et la partie inférieure de boîtier (8).
